# EUROPÄISCHE PATENTSCHRIFT

(11) **EP 1 536 992 B1**
(45) Veröffentlichungstag und Bekanntmachung des Hinweises auf die Patenterteilung: **03.05.2006**
(21) Anmeldenummer: 03735273.9
(22) Anmeldetag: 06.05.2003
(51) Int. Cl.: B60R 22/46, B60R 22/195

(54) **VERFAHREN ZUR ANSTEUERUNG EINES ZWEISTUFIGEN GURTSTRAFFERS**
METHOD FOR CONTROLLING THE PRELOAD DEVICE OF A TWO-LEVEL BELT
PROCEDE POUR COMMANDER UN PRETENSIONNEUR DE CEINTURE A DEUX ETAGES

(30) Priorität: 06.07.2002 DE 10230483
(43) Veröffentlichungstag der Anmeldung: 08.06.2005
(73) Patentinhaber: ROBERT BOSCH GMBH, 70442 Stuttgart (DE)
(72) Erfinder: CZAYKOWSKA, Anja, 70736 Fellbach (DE); AUST, Sabine, 70192 Stuttgart (DE)
(86) Internationale Anmeldenummer: PCT/DE2003/001435
(87) Internationale Veröffentlichungsnummer: WO 2004/005080

## Beschreibung

### Stand der Technik

Die Erfindung geht aus von einem Verfahren zur Ansteuerung eines zweistufigen Gurtstraffers nach der Gattung des unabhängigen Patentanspruchs. Ein solches Verfahren is aus der US 5 400 487 A bekannt.

### Vorteile der Erfindung

Das erfindungsgemäße Verfahren zur Ansteuerung eines zweistufigen Gurtstraffers weist die Merkmale des Kennzeichnenden Teil des Anspruchs 1 auf.

Durch die in den abhängigen Ansprüchen aufgeführten Maßnahmen und Weiterbildungen sind vorteilhafte Verbesserungen des im unabhängigen Patentanspruch angegebenen Verfahrens zur Ansteuerung eines zweistufigen Gurtstraffers möglich.

Besonders vorteilhaft ist, dass im Falle von harten Crashereignissen die zweite Gurtstrafferstufe mit einer minimalen Verzögerung hinter der ersten gezündet wird, während bei weicheren bzw. langsameren Crashes genügend Zeit für eine detaillierte Auswertung der Signale, die von der Beschleunigung abgeleitet werden, zur Verfügung steht. Diese Signale können von einem Sensor im Zentralgerät und von ausgelagerten Satellitensensoren, wie es beispielsweise Upfrontsensoren sind, stammen.

Das erfindungsgemäße Verfahren ermöglicht, dass der Einsatz der zweiten Gurtstrafferstufe, die hier üblicher Weise pyrotechnisch gezündet wird, beispielsweise zwischen der ersten und zweiten Airbagstufe liegt, so dass sich eine Gesamtabfolge der Rückhaltemittel im Falle eines Frontalcrashes ergibt:

Gurtstraffer erste Stufe - Airbag erste Stufe - Gurtstraffer zweite Stufe - Airbag zweite Stufe.

Zeitlich soll die zweite Gurtstrafferstufe jedoch möglichst vor der ersten Airbagstufe gezündet werden, so dass das erfindungsgemäße Verfahren die Zeitbedingungen relativ zur ersten Gurtstrafferstufe auswertet.

Das erfindungsgemäße Verfahren vergleicht das Geschwindigkeitssignal in Fahrtrichtung, also den sogenannten X-Integrator, der das Beschleunigungssignal in Fahrtrichtung integriert, mit einer festen Schwelle. Diese Schwelle ist im allgemeinen verschieden für Fahrer, Beifahrer und gegebenenfalls auch für Rücksitzpositionen. Weiterhin können unterschiedliche Schwellen für unterschiedliche statische Bedingungen, unter denen der Crash stattfindet, angelegt werden. Solche statischen Bedingungen sind Bedingungen, die sich während des Crashes nicht ändern. Dazu gehören zum Beispiel die Position des Fahrer- bzw. Beifahrersitzes, d.h. große bzw. kleine Distanz zum Lenkrad, bzw. dem Armaturenbrett, die Geschwindigkeit des Fahrzeugs bei Crashbeginn, die in verschiedene Klassen eingeteilt werden kann, die Relativgeschwindigkeit zum Hindernis vor dem ersten Kontakt, die mittels Precrashsensorik ermittelt wird und andere Informationen, die im Fahrzeug verfügbar sind.

Dynamische Informationen aus Zusatzfunktionen, die während des Crashes aus Sensorsignalen berechnet werden, können die Schwellen zeitabhängig modifizieren, d.h. es wird eine Adaption vorgenommen.

Das erfindungsgemäße Verfahren wird nur bis zu einem maximalen Zeitpunkt nach Überschreiten der Schwelle für die erste Gurtstrafferstufe, also einer maximalen Verzögerung zwischen der ersten und zweiten Stufe, berechnet, da sonst auch Crashes, die die geforderte Schwere für das Auslösen der zweiten Gurtstrafferstufe nicht erreichen, die Integratorschwelle für die zweite Gurtstrafferstufe in dem späteren Crashverlauf letztlich erreichen würden. Für Crashes, die sich erst spät im Crashverlauf als so schwer erweisen, dass die zweite Airbagstufe ausgelöst werden muss, zum Beispiel bei Crashes gegen eine weiche Barriere, kann es sich als sinnvoll erweisen, ein gleichzeitiges Auslösen der zweiten Gurtstrafferstufe mit der zweiten Airbagstufe zu gewährteisten.

Letztlich ist es auch von Vorteil, dass mit der zweiten Gurtstrafferstufe gleichzeitig ein Knieairbag angesteuert wird. Die zweite Gurtstrafferstufe kann dabei als eine zweite pyrotechnische Zündung in Hüft- oder in Scliulterhöhe, als auch als Bag-in-Belt verbaut sein.

### Zeichnung

Ein Ausführungsbeispiele der Erfindung sind in der Zeichnung dargestellt und werden in der nachfolgenden Beschreibung näher erläutert.

Es zeigen
- Figur 1: ein Blockschaltbild des erfindungsgemäßen Verfahrens,
- Figur 2: ein Flussdiagramm des erfindungsgemäßen Verfahrens,
- Figur 3: eine Teilfunktion des erfindungsgemäßen Verfahrens für Härtecrashs,
- Figur 4: eine Teilfunktion des erfindungsgemäßen Verfahrens für weiche Crashs, '
- Figur 5: einen ersten Signalverlauf des integrierten Beschleunigungssignals in x-Richtung und
- Figur 6: einen zweiten Signalverlauf des integrierten Beschleunigungssignals in x-Richtung.

### Beschreibung

Heutige Systems sind darauf ausgelegt, in Abhängigkeit von der detektierten Crashschwere ein einstufiges Gurtstraffersystem anzusteuern. Der dazu notwendige Auslöseentscheidungsalgorithmus wird folgendermaßen durchgefiihrt:

Das Beschleunigungssignal des zentralen Steuergeräts durchläuft zwei zentrale Pfade. Im oberen Pfad wird das Integral der Beschleunigung in x-Richtung, also in Fahrtrichtung, das ist dann die abgebaute Geschwindigkeit im Crashverlauf, berechnet. Während im unteren Pfad mittels verschiedener Filterfunktionen crash- und fahrzeugspezifische Merkmale aus dem Beschleunigungssignal ebenfalls in Fahrtrichtung extrahiert und in eine beschleunigungsabhängige Auslöseschwelle umgerechnet werden. Die Auslöseentscheidung entsteht dann durch Vergleich des Integratorwertes mit der Auslöseschwelle.

Erfindungsgemäß wird nun in dieses Konzept die Auslösung einer zweiten Gurtstrafferstufe integriert.

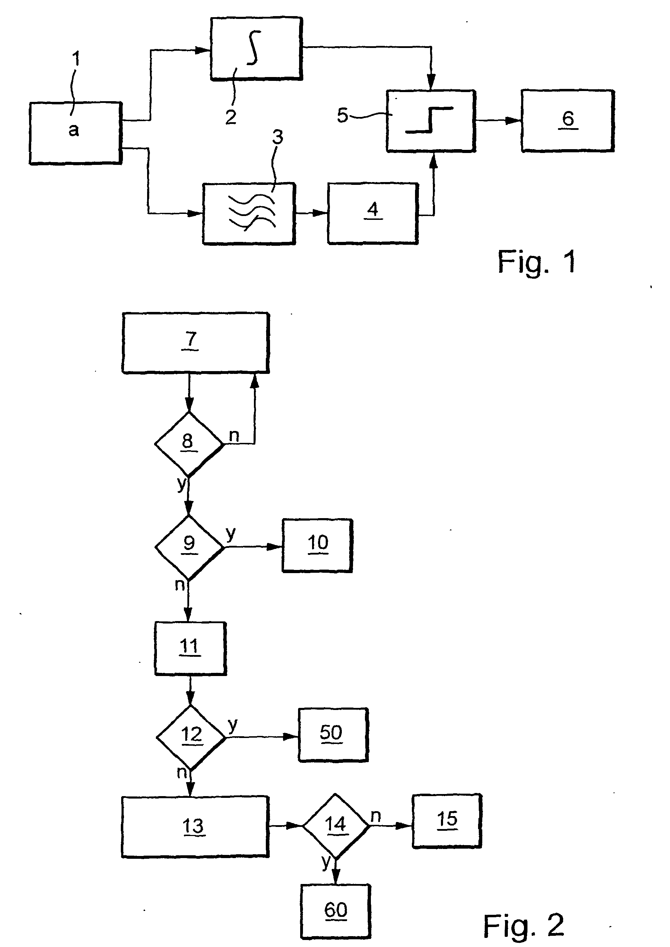

Figur 1 zeigt als Blockschaltbild den grundsätzlichen Ablauf bei der Auswertung eines Beschleunigungssignals a, das im Block 1 durch einen Beschleunigungssensor gewonnen wird. Dieses Beschleunigungssignal wird in Block 2 integriert zu einem Geschwindigkeitssignal, das bei einem Crash der abgebauten Geschwindigkeit entspricht. Im unteren Pfad in Block 3 wird das gleiche Beschleunigungssignal durch einen Filter 3 gefiltert um dann in Verbindung mit anderen fahrzeugspezifischen Merkmalen aus diesem gefilterten Beschleunigungssignal eine Auslöseschwelle für das integrierte Beschleunigungssignal zu bestimmen. Diese Auslöseschwelle, die zeitabhängig bestimmt wird, wird einem Schwellwertentscheider 5 als Schwelle zur Verfiigung gestellt. Der Schwellwertentscheider 5 vergleicht nun das integrierte Beschleunigungssignal aus dem Block 2 mit dieser Schwelle. Liegt das integrierte Beschleunigungssignal über dieser Schwelle, dann wird auf einen Auslösefall erkannt. Dies wird dann einem Block 6 zugeführt, der für die Ansteuerung von Rückhaltemitteln verantwortlich ist. Um die Rückhaltemittel letztlich auszulösen, ist noch das Signal eines Plausibilitätssensors erforderlich. Dazu kann beispielsweise ein Sicherheitsschalter oder ein weiterer Beschleunigungssensor eingesetzt werden.

Figur 2 zeigt nun den Ablauf des erfindungsgemäßen Verfahrens. In Verfahrensschritt 7 wird das Beschleunigungssignal a in Block 1 erzeugt. In Verfahrensschritt 8 wird mittels einer Schwellwertentscheidung im Schwellwertentscheider 5 entschieden, ob ein Auslösefall vorliegt. Ist dies nicht der Fall, wird zu Verfahrensschritt 7 zurückgesprungen. Ist das jedoch der Fall, dann wird in Verfahrensschritt 9 überprüft, ob zusätzlich zu der nun auslösenden ersten Gurtstrafferstufe auch die zweite Gurtstrafferstufe ausgelöst werden soll. D.h. es findet in Schritt 9 die Prüfung darauf hin statt, ob ein harter Crash vorliegt. In einem solchen Fall muss die zweite Gurtstrafferstufe sofort ausgelöst werden und eine weitere Signalanalyse ist nicht mehr notwendig. Wird also ein harter Crash erkannt, dann wird zu Verfahrensschritt 10 gesprungen und die zweite Gurtstrafferstufe ausgelöst. Parallel dazu und danach berechnet ein weiterer Algorithmus die Auslöseentscheidung für die Airbags.

In die Ansteuerung des Gurtstraffers gehen auch Daten über den Insassen ein. D.h. ist der Platz überhaupt besetzt, welche Gewichtsparameter weist die Person auf und auf welchem Platz sitzt sie. Es können mehr oder weniger als diese drei Parameter verwendet werden. Sitzt die Person auf dem Fahrersitz, dann müssen die Gurtstraffer früher ausgelöst werden, da der Abstand zum Lenkrad, also zu einem Aufprallobjekt für die Person, näher ist als für den Beifahrer zur Armatur. Dies sind statische Parameter, die die Auslöseschwellen im Block 4 bestimmen.

Wurde in Verfahrensschritt 9 erkannt, dass kein harter Crash vorliegt, also dass nur die erste Stufe ausgelöst wird, dann erfolgt in Verfahrensschritt 11 eine detaillierte Signalanalyse des integrierten Beschleunigungssignals. Es kann auch hier das Beschleunigungssignal an sich ausgewertet werden. Ergibt in Verfahrensschritt 12 die Signalanalyse, dass nun auch die zweite Gurtstrafferstufe ausgelöst werden muss, da beispielsweise der weiche Crash sich als so gefährlich erweist, dass die Person mit der zweiten Gurtstrafferstufe zu schützen ist, dann wird zu Verfahrensschritt 50 gesprungen, um die zweite Gurtstrafferstufe auszulösen. Wurde jedoch durch die Signalanalyse in Verfahrensschritt 12 keine Auslösung für die zweite Gurtstrafferstufe ermittelt, dann wird zu Verfahrensschritt 13 gesprungen, um die zweite Airbagstufe zu überwachen. Wurde nun in Verfahrensschritt 14 festgestellt, dass die zweite Airbagstufe ausgelöst wird, dann wird zu Verfahrensschritt 60 gesprungen, um auch die zweite Gurrstrafferstufe auszulösen. Wurde in Verfahrensschritt 14 erkannt, dass die zweite Airbagstufe nicht ausgelöst wird, wird zu Verfahrensschritt 15 gesprungen, um das erfindungsgemäße Verfahren hier zu beenden.

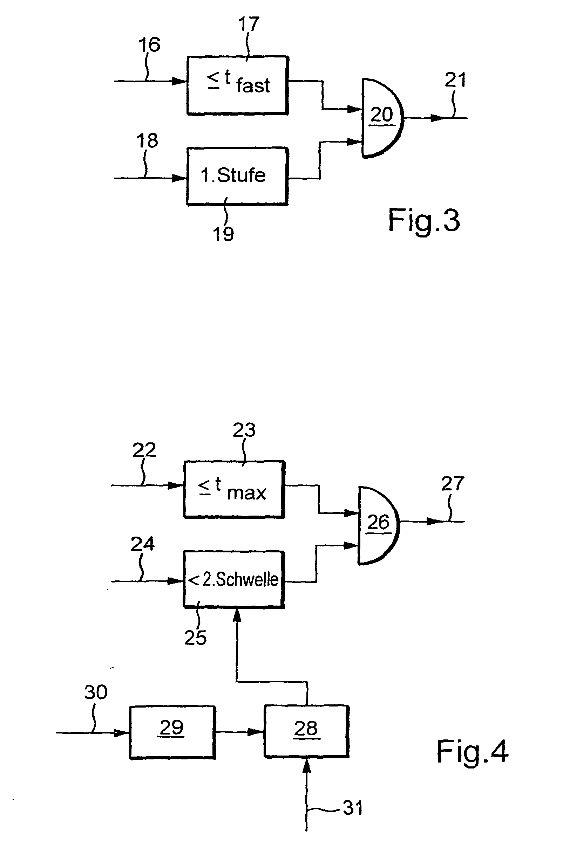

Figur 3 zeigt als Blockschaltbild den Fall für einen harten Crash. Die Integrationszeit 16, das ist die Zeit, nachdem die Rauschschwelle überschritten wurde und die Integration des Beschleunigungssignals A begonnen hat, wird einem Block 17 zugefiihrt, in dem überprüft wird, ob die Integrationszeit unter der Zeit t_{fast} liegt, die experimentell festgelegt wurde, um einen harten Crash zu erkennen. D.h. innerhalb dieser Zeit muss die erste Gurtstrafferstufe bereits gezündet worden sein. Dies wird im unteren Zweig überprüft. Einem Block 19 wird ein Signal 18 zugeführt, das anzeigt, ob diese erste Stufe des Gurtstraffers gezündet wurde. Ist das der Fall, dann gibt der Block 19 eine logische 1 ab und der Block 17 gibt dann auch eine logische 1 ab, wenn die Integrationszeit noch unter der Zeit t_{fast} liegt. Die Ausgänge beider Funktionen 17 und 19 werden einem UND-Gatter 20 zugeführt, so dass das UND-Gatter 20 nur eine logische 1 abgibt, wenn beide Bedingungen erfüllt sind, die einen harten Crash anzeigen. Liegt bei beiden also eine logische 1 vor, dann wird als Ausgangssignal des UND-Gatters 20 einen logische 1 abgegeben, die als Signal 21 dann anzeigt, dass nun auch die zweite Gurtstrafferstufe sofort zu zünden ist. In diesem Fall liegt demnach ein harter Crash vor. Hier wird keine weitere Signalanalyse durchgeführt, die nur zu einer Verzögerung führen würde.

Figur 4 zeigt als Blockdiagramm den Fall eines weichen Crashes. Ein Signal 22 liefert die Integrationszeit einem Block 23, der überprüft, ob diese Integrationszeit unterhalb einer Zeit tₘₐₓ liegt. Diese Zeit tₘₐₓ wird festgelegt, um zu verhindern, dass bei einem weichen Crash die zweite Gurtstrafferstufe nicht nur wegen einer bestimmten Zeit, die abgelaufen ist, ausgelöst wird, um so ein unnötiges Auslösen dieses Rückhaltemittels zu vermeiden. Der Block 23 gibt demnach nur eine logische 1 ab, wenn die Integrationszeit unterhalb dieser Zeit tₘₐₓ liegt. Das Ausgangssignal des Blocks 23 wird wiederum einem UND-Gatter 26 zugeführt. Einem Block 25 wird ein Signal 24 zugefiihrt, das das integrierte Beschleunigungssignal in Fahrtrichtung ist. Dieses integrierte Beschleunigungssignal wird im Block 25 mit der zweiten Schwelle, also der Schwelle für die zweite Gurtstrafferstufe verglichen. Liegt dieses Signal über der zweiten Schwelle, dann gibt der Block 25 eine logische 1 ab, und zwar an das UND-Gatter 26. Damit wird das UND-Gatter 26 als Ausgangssignal 27 nur dann eine logische 1 abgeben, wenn die Integrationszeit unterhalb der Zeit tₘₐₓ liegt und die zweite Schwelle überschritten wurde. Die zweite Schwelle 25 wird jedoch dynamisch berechnet. Dies erfolgt im Block 28, der einerseits durch ein Signal 31 gespeist wird, aus dem dynamische Informationen hervorgehen. Andererseits gehen in die Schwellwertberechnung 28 statische Informationen 30 ein, die zunächst im Block 29 zu einer ersten Schwellwertberechnung führen. Diese erste Schwelle wird dem Block 28 zugeführt, der dann in Abhängigkeit von den dynamischen Informationen eine Modifikation dieser Schwelle vornimmt. Wie oben dargestellt, werden dynamische Informationen als Sensorsignal berechnet, während die statischen Informationen solche Bedingungen sind, die sich während eines Crashes nicht ändern, wie die Position des Fahrer- und Beifahrersitzes, die Geschwindigkeit des Fahrzeugs bei Crashbeginn, die Relativgeschwindigkeit im Vergleich zum Hindernis vor dem ersten Kontakt und andere solche Informationen.

Gibt nun das UND-Gatter 26 eine logische 1 als Signal 27 ab, dann wird die zweite Gurtstrafferstufe gezündet.

Diese Signale, ob ein Gurtstraffer gezündet wurde, wird üblicher Weise durch Flaggen angezeigt, die in Registern gesetzt wurden. Das erfmdungsgemätie Verfahren läuft üblicherweise auf einem Prozessor im zentralen Steuergerät ab. Als ein solcher Prozessor kann ein Mikrokontroller verwendet werden. Es ist jedoch auch möglich, dass durch eine verteilte Intelligenz dieser Algorithmus berechnet wird. D.h., den Gurtstraffern ist in diesem Fall ein eigener Prozessor zugeordnet.

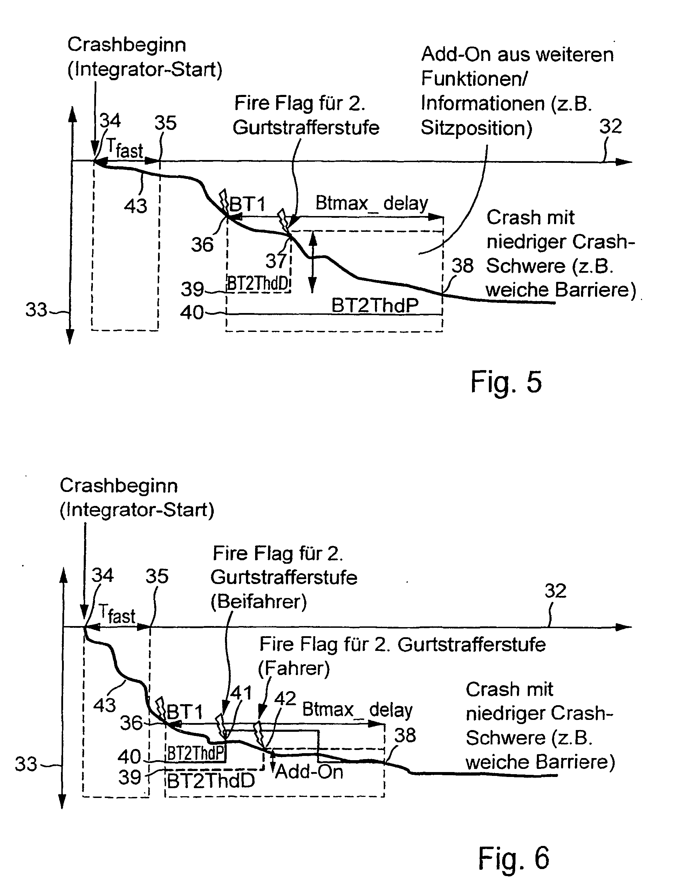

Figur 5 zeigt einen ersten typischen Crashverlauf, der bei einem Crash mit niedriger Crashschwere auftritt. Die Crashschwere wird hier durch ein von der Beschleunigung abgeleitetes Signal, in diesem Fall durch das Geschwindigkeitssignal, bestimmt. Die Crashschwere wird dabei insbesondere durch eine Merkmalsanalyse festgelegt. Das Geschwindigkeitssignal 43 ist hier in einem Geschwindigkeits-Zeit-Diagramm dargestellt. Auf der Abszisse 32 ist die Zeit dargestellt, während auf der Ordinate 33 das Geschwindigkeitssignal dargestellt ist. Zum Zeitpunkt 34 startet der Integrator, da hier eine Rauschschwelle überschritten wird. Von diesem Zeitpunkt 34 an wird das Zeitintervall bis zur Zeit t_{fast} 35 überwacht, um festzustellen, ob ein harter Crash vorliegt. Die Bedingung ist, wie oben dargestellt, dass in dieser Zeit die erste Gurtstrafferstufe gezündet wird. In einem solchen Fall wird nach dem Zünden der ersten Gurtstrafferstufe nach der Zeit t_{delay}, die vorgegeben ist, automatisch die zweite Gurtstrafferstufe gezündet, ohne eine weitere Signalanalyse durchzuführen. Dies ist jedoch hier nicht der Fall. Im weiteren Verlauf zum Zeitpunkt 36 wird der Schwellwert für die erste Gurtstrafferstufe erreicht und die erste Gurtstrafferstufe wird gezündet Ab dem Zeitpunkt 36 wird die Zeitspanne bis zum Zeitpunkt 38 überwacht, denn in dieser Zeit muss die zweite Gurtstrafferstufe gezündet werden, oder es liegt ein solcher Crash mit niedriger Crashschwere vor, beispielsweise gegen eine weiche Barriere, dass der Einsatz der zweiten Gurtstrafferstufe nicht notwendig ist. Zum Zeitpunkt 37 wurde jedoch die Schwelle für den Fahrer für die zweite Gurtstrafferstufe erreicht, und es wird die zweite Gurtstrafferstufe gezündet. Diese Schwelle 39 setzt sich einmal aus der statischen Information zusammen, die oben dargestellt wurde, und einem Add-On, also einem Zuschlag, aus weiteren dynamischen Parametern. Hier geht dann insbesondere die Crashtyperkennung ein. Die Schwelle 40 für den Beifahrer wird durch das Signal 43 während der Zeit bis zum Zeitpunkt 38 jedoch nicht erreicht, so dass hier der Einsatz der zweiten Gurtstrafferstufe für den Beifahrer nicht notwendig ist.

Figur 6 zeigt einen Crashverlauf mit hoher Crashschwere. Die gleichen Elemente, die in Figur 5 dargestellt sind, sind hier mit den gleichen Bezugszeichen bezeichnet und werden nicht näher erläutert. Der Signalverlauf des integrierten Beschleunigungssignals 43 erreicht hier wiederum zum Zeitpunkt 36 eine solche Schwere, dass die erste Gurtstrafferstufe ausgelöst wird. Wiedemm wird bis zum Zeitpunkt 38 überwacht, ob die zweite Gurtstrafferstufe ausgelöst wird. Hier wird jedoch bereits zum Zeitpunkt 41 die Schwelle für den Beifahrer durch das Signal 43 überschritten, so dass die zweite Gurtshafferstufe für den Beifahrer hier ausgelöst wird. Die Schwelle 40 wird hier nämlich zum Zeitpunkt 41 aufgrund der dynamischen Informationen durch das Crashsignal abgesenkt und so kommt es zu einem Überschreiten dieser Schwelle. Im weiteren Signalverlauf sieht man, dass die Schwelle 40 wieder angehoben wird. Die Schwelle für den Fahrer 39 wird erst zum Zeitpunkt 42 durch das Signal 43 überschritten. Auch hier bestimmt der Signalverlauf eine Adaption der Schwelle. Damit wird zum Zeitpunkt 42 auch die zweite Gurtstrafferstufe für den Fahrer ausgelöst. Insgesamt wird hier ein typischer Verlauf für einen Crash mit hoher Crashschwere beim Aufprall beispielsweise gegen eine harte Barriere dargestellt.

Die Anforderungen für das Auslösen der zweiten Gurtstrafferstufe sind im Allgemeinen unterschiedlich für Fahrer und Beifahrer. So soll die zweite Gurtstrafferstufe beispielsweise für den Fahrer schon bei einer geringeren Crashschwere gezündet werden, als beim Beifahrer, um Knieverletzungen zu verhindern. Dies gilt besonders für eine Sitzposition, die sehr nahe am Lenkrad ist. Die Verletzungsgefahr beim Beifahrer durch Durchrutschen unterhalb des Gurtes, das sogenannte Submarining, kann dagegen erst bei größeren Crashschweren relevant werden.

## Patentansprüche

1. Verfahren zur Ansteuerung eines zweistufigen Gurtstraffers, wobei die zweite Stufe des Gurtstraffers in Abhängigkeit von einer Crashschwere und einer Sitzposition angesteuert wird, wobei die Crashschwere durch wenigstens ein von einer ermittelten Beschleunigung während einer Kollision abgeleitetem Signal bestimmt wird und die Sitzposition die Auswertung des wenigstens einen Signales bestimmt **dadurch gekennzeichnet, dass**, wenn die Crashschwere einen harten Crash anzeigt, die zweite Stufe nach einer vorgegebenen Zeit nach Ansteuerung der ersten Stufe angesteuert wird.

## Claims

1. Method for actuating a two-stage seatbelt preload device, with the second stage of the seatbelt preload device being controlled as a function of the severity of a crash and a sitting position, with the severity of a crash being determined by at least one signal which is derived from a determined acceleration during a collision, and with the sitting position determining the evaluation of the at least one signal, **characterized in that**, if the severity of a crash indicates a hard crash, the second stage is actuated after a predetermined time after the first stage is activated.

## Revendications

1. Procédé de commande d'un tendeur de ceinture de sécurité à deux niveaux, le deuxième niveau du tendeur de ceinture de sécurité étant commandé en fonction d'un degré de gravité d'impact et d'une position de siège, le degré de gravité d'impact étant défini par au moins un signal dérivé d'une accélération déterminée pendant une collision, et la position de siège déterminant l'exploitation du signal,
**caractérisé en ce que**
lorsque le degré de gravité d'impact indique un impact violent, le deuxième niveau est commandé un temps prédéterminé après la commande du premier niveau.
